Europäisches Patentamt

European Patent Office

Office européen des brevets

(19)

(11) Veröffentlichungsnummer: **0 005 454**
**B1**

(12) **EUROPÄISCHE PATENTSCHRIFT**

(21) Anmeldenummer: **79101165.3**

(22) Anmeldetag: **17.04.79**

(51) Int. Cl.³: **B 60 T 13/26**

(54) Bremseinrichtung für Fahrzeuge

(30) Priorität: **12.05.78 DE 2820921**

(43) Veröffentlichungstag der Anmeldung:
**28.11.79 Patentblatt 79/24**

(45) Bekanntmachung des Hinweises auf die Patenterteilung:
**07.01.81 Patentblatt 81/01**

(84) Benannte Vertragsstaaten:
**CH DE FR SE**

(56) Entgegenhaltungen:
**DE - B - 1 287 956**
**DE - B - 2 342 592**
**DE - B - 2 415 482**
**DE - U - 7 637 986**
**DE - U - 7 707 274**

(73) Patentinhaber: **Knorr-Bremse GmbH**
**Moosacher Strasse 80**
**D - 8000 München 40 (DE)**

(72) Erfinder: **Pöllinger, Hans**
**Rainfarnstrasse 65**
**D - 8000 München 45 (DE)**

EP 0 005 454 B1

## Bremseinrichtung für Fahrzeuge

Die Erfindung bezieht sich auf eine Bremseinrichtung für Fahrzeuge mit einem über Steuerventileinrichtungen druckmittelbeaufschlagbaren Bremszylinder einer Betriebsbremse, mit einer willkürlich betätigbaren, auf das Bremsglied (Brems-Klotz oder-Backe) der Betriebsbremse über einen Hebel wirkenden Festellbremse und mit einer mit dem Hebel der Festellbremse gekoppelten Schalteinrichtung zur Überwachung der Druckmittelbeaufschlagung der Betriebsbremse.

Es ist üblich, daß Betriebsbremsen und Festellbremsen auf das gleiche, die eigentliche Bremsarbeit erzeugende System aus Bremsklotz bzw. Bremsbacke wirken. Das Bremsgestänge muß daher im allgemeinen für die Summe der Kräfte aus Betriebsbremse und Festellbremse ausgelegt sein.

Beim Bremsen mit Betriebsbremse und wirksamer Festellbremse verlagert sich nach dem Lösen der Betriebsbremse die gesamte Kraft im Gestänge auf die Festellbremse. Dadurch kann bei Festellbremsen mit Spindelbetrieben deren Flankenpressung so groß werden, daß ein Lösen der Festellbremse nicht mehr möglich ist, oder bei Festellbremsen mit Bowdenzügen können diese überlastet werden.

Es sind Bremseinrichtungen der eingangs genannten Art bekannt (DE—GM 77 07 274), bei denen die Betriebsbremse gelöst wird, sobald die Festellbremse angelegt wird. Hierbei ist nahe dem Bremszylinder bzw. nahe dem Angriffspunkt des Gestänges der Festell-bremse verbunden ist, derart gesteuert, daß der zylinders ein Dreiwegeventil angeordnet. Ein Betätigungsglied des Dreiwegeventiles wird von einem Nocken, der mit Teilen der Festellbremse verbunden ist, derart geseuert, daß der Bremszylinder bei Lösestellung der Festell-bremse ungehindert mit Bremsdruck beaufschlagt werden kann, hingegen beim Anziehen der Festellbremse die Zuleitung von Bremsdruck zum Bremszylinder unterbrochen und letzterer entlüftet wird. Das Betätigungsglied des Dreiwegeventils spricht auf einen seitens des Nockens hervorgerufenen, bestimmten Hubweg an. Um den Beginn dieses Hubweges und seine Größe der Zuspannkraft der Festellbremse einwandfrei zuzuordnen, ist eine genaue, lagemäßige Zuordnung (Justierung) der Bewegungsabläufe aller das Betätigungsglied des Dreiwegeventiles steuernden Teile erforderlich.

Bei dieser bekannten, "weggesteuerten" Einrichtung ist nachteilig, daß es vorkommen kann, daß die Betriebsbremse bereits gelöst wird, bevor die Festellbremse wirksam ist, oder daß die Betriebsbremse erst gelöst wird, wenn die Festellbremse bereits mit einem hohen Kraftanteil wirkt.

In beiden Fällen wird der eigentliche beabsichtigte Effekt durch die bekannte Einrichtung nicht erreicht.

Es ist des weiteren eine Einrichtung bekannt (DE—Gbm 76 37 986), bei welcher eine Druckluftbremseinrichtung mit einer hydraulisch gesteuerten Festellbremse kombiniert ist. Hierbei wird durch ein besonderes Ventil der Aufbau des die Festellbremse steuernden Hydraulikdruckes bei Vorhandensein eines die Betriebsbremse betätigenden Luftdruckes durch letzteren unterbunden. Durch geeignete Wahl der gegeneinander arbeitenden und von je einem Druckmedium beaufschlagten Flächen des Kolbens kann ein Zustand erreicht werden, in dem die gesamte Kraft der kombinierten Bremseinrichtung die maximale Kraft der Festellbremseinrichtung nicht überschreiten kann.

Für diese bekannte Einrichtung muß neben Druckluft ein Hydraulikdruckkreis vorhanden sein, eine Forderung, die z.B. bei einem antriebslosen Schienenfahrzeug (Waggon) nicht erfüllbar ist. In dem besonderen Ventil müssen Dichtmittel für Luft- und Hydraulikdruck vorgesehen sein, ein Umstand, der zu Verteuerungen beiträgt.

Es ist des weiteren eine Druckluft-Zweileitungsbremseinrichtung für Kraftwagenzüge bekannt (DE—PS 1 287 956), welcher die Aufgabe zugrundeliegt, eine Bremseinrichtung so auszubilden, daß bei allen bei einer Lastzugbremse vorkommenden Betriebsverhältnissen sichergestellt ist, daß der Zugwagen wenigstens mit der Federspeicherbremse und der Anhänger mittels der Druckluftbremse gebremst werden kann, ohne daß durch gleichzeitiges Wirken von Federspeicherbremse und Druckluftbremse an einer Achse eine Überbremsung eintreten kann. Hierzu wurde eine im wesentlichen aus drei Einzelventilen bestehende Ventileinrichtung geschaffen, deren wesentlichste Merkmale ein Wiegekolben ist, der über einen Hebel mit benachbart, gleichachsig liegenden Ventilen verbunden ist und somit in Abhängigkeit der eingeleiteten Bremsvorgänge, auch bei in Teilen der gesamten Bremseinrichtung auftretenden Störungen, einen das Fahrverhalten des Fahrzeuges nicht gefährdenden Bremsverlauf sicherstellt.

Mit der DE—AS 24 15 482 ist eine Mehrkreis-Druckluftbremsanlage für Kraftfahrzeuge bekannt geworden, die ein von einem Vorderachsbremskreis, einem Hinterachsbremskreis und einem ein handbremsventil aufweisenden Hilfsbremskreis ansteuerbares Relaisventil zur Steuerung des einem Federspeicherbremskreis zuzuführenden Druckes aufweist. Das zwei Wiegekolben und vier Steuerkammern aufweisende Relaisventil verhindert eine überlagerung von Betriebs- und Federspeicherbremse, also eine überlastung des Bremsgestänges, indem es während Betriebsbremsungen eine etwaig vorliegende Federspeicherbremsung wenigstens teilweise löst bzw. die Federspeicherbremse wenigstens teilweise unbetätigbar hält und erst bei Lösen der Betriebsbremse wieder zur Wirkung gelangen lässt. Zugleich bewirkt das Relaisventil während Betriebsbremsungen mit schadhaftem Hinterachsbremskreis ein der Betätigung des Vorderachsbremskreises proportionales Betätigen der Federspeicherbremse.

Die DE—AS 23 42 592 schließlich zeigt für eine Kraftfahrzeug-Druckluftbremsanlage mit einem Betriebs-, einem Anhänger- und einem Federspeicherbremskreis den Einbezug eines eine überlagerung von Betriebs- und Federspeicherbremse ähnlich wie vorstehend geschildert ausschließenden Wiegekolbens in ein Handbremsventil.

Alle vorstehend erwähnten, von den eingangs genannten Merkmalen abweichenden Kraftfahrzeug-Druckluftbremsanlagen sind nur mit als Federspeicherbremsen ausgebildeten Feststellbremsen verwendbar und bedürfen einer gegenseitigen Abstimmung von Betriebsbremsdruck, Federspeicherbeaufschlagungsdruck und der Kolbenflächen der Wiegekolben.

Es ist daher die Aufgabe der Erfindung, bei einer Bremseinrichtung der eingangs genannten Gattung mit einfachen, keine besondere Herstellungspräzision benötigenden und nach dem Einbau leicht zu justierenden Mitteln sicherzustellen, daß bei Betätigung der Betriebs- und der Feststellbremse die Betriebsbremse zu einem Zeitpunkt gelöst bzw. unbetätigbar gehalten wird, bei welchem einerseits die Feststellbremse bereits eine bestimmte Bremskraft aufweist und andererseits die Summeirung der Feststellbremskraft zur Betriebsbremskraft unterhalb einer zu Schäden führenden Belastung bleibt.

Diese Aufgabe wird erfindungsgemäß durch eine Ausbildung der Bremseinrichtung entsprechend den im Kennzeichen des Patentanspruches 1 erwähnten Merkmalen gelöst.

Vorteilhafte Ausbildungsmöglichkeiten für eine nach der Erfindung ausgebildete Bremseinrichtung sind aus den Unteransprüchen. entnehmbar.

Ausführungsbeispiele für nach der Erfindung ausgebildete Bremseinrichtung sind im Folgenden näher erläutert und in der Zeichnung schematisch dargestellt.

Es zeigt:

Fig. 1 ein erstes Ausführungsbeispiel und
Fig. 2 ein zweites Ausführungsbeispiel einer erfindungsgemäßen Bremseinrichtung.

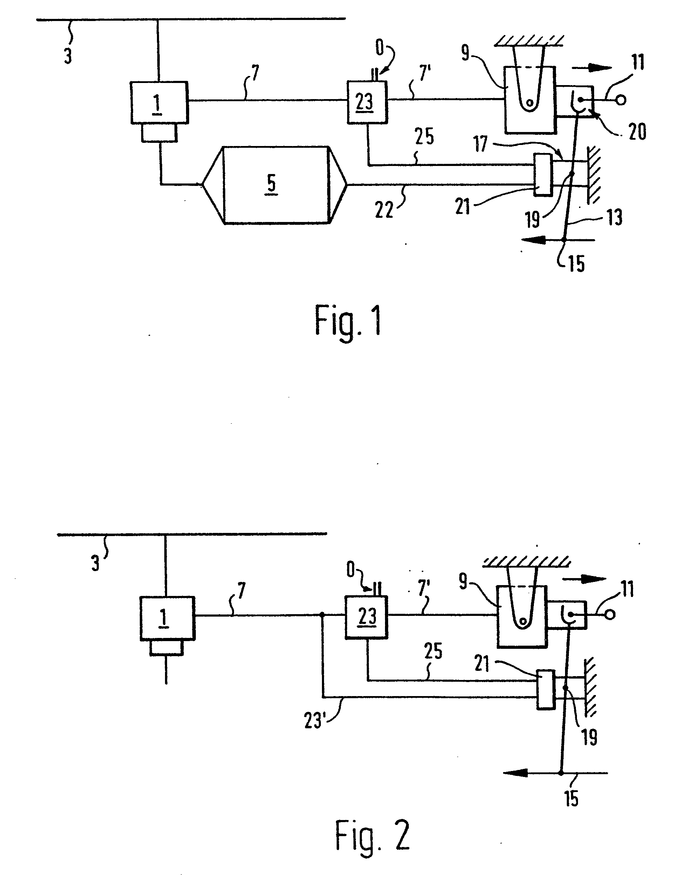

Nach Fig. 1 ist eine Steuerventileinrichtung 1 mit einer Hauptluftleitung 3 und einem den Vorratsluftbehälter der Bremseinrichtung darstellenden Luftvorratsbehälter 5 verbunden. Leitungsabschnitte 7 und 7' führen einem Betriebsbremszylinder 9 Bremsdruck zu. Ein Betätigungsglied 11 (Kolbenrohr oder Kolbenstange) des Betriebsbremszylinders 9 ist mit nicht dargestellten Bremsklötzen oder Bremsbacken gekoppelt und kann diese zur Anlage bringen.

Ein Hebel 13, an dessen einem Ende eine Betätigungseinrichtung 15 für eine Feststellbremse angreift, weist in seinem mittleren Abschnitt eine Lagerstelle 19 an einem Betätigungsglied 17 einer Schalteinrichtung 21 auf.

In die Leitungsverbindungen 7, 7' von der Steuerventileinrichtung 1 zum Betriebsbremszylinder 9 ist eine Überwacheinrichtung 23 eingeschaltet. Die Überwacheinrichtung 23 ist über eine Steuerlietung 25 mit der Schalteinrichtung 21 verbunden.

Zur Vorsorgund der Steuerleitung 25 durch die Schalteinrichtung 21 mit einem Hilfssteuerdruck ist letztere bei einem ersten Ausführungsbeispiel nach Fig. 1 durch eine Leitung 22 mit dem Luftvorratsbehälter 5 verbunden. Bei einem zweiten, in Fig. 2 dargestellten Ausführungsbeispiel wird der Schalteinrichtung 21 über eine Leitung 23' und eine Abzweigung an dem Leitungsabschnitt 7 zwischen der Steuerventileinrichtung 1 und der Überwacheinrichtung 23 Bremsdruck zugeführt.

Der Hebel 13 der Feststellbremse ist mit dem Betätigungsglied 11 des Betriebsbremszylinders 9 über einen Eingriff 20 derart gekoppelt, daß ein Zuspannhub des Betätigungsgliedes 11 des Bremszylinders 9 kein Schwenken des Hebels 13 zur Folge hat, hingegen andererseits ein Schwenken des Hebels 13 beim Festziehen der Feststellbremse und damit Bewegungen der Betätigungseinrichtung 15 gemäß dargestelltem Pfeil zu einer Kraftübertragung zwischen Hebel 13 und Betätigungsglied 11 führt.

.Da ein Betriebsbremsen zu keinem Schwenken des Hebels 13 führt, kommt es hierbei zu keiner Betätigung des Betätigungsgliedes 17 der Schalteinrichtung 21. In diesem Falle ist die Schalteinrichtung 21, zum Beispiel ein Ventil, vorzugsweise geschlossen, so daß die Steuerleitung 25 zur Überwacheinrichtung 23 ohne Hilfssteuerdruck ist.

Wird jedoch bei einer bestehenden Betriebsbremsung zusätzlich die Feststellbremse angezogen, also die Betätigungseinrichtung 15 bewegt, so vermag der hierbei um den Eingriff 20 schwenkende Hebel 13 an seine Lagerstelle 19 auf das Betätigungsglied 17 der Schalteinrichtung 21 eine Kraft auszuüben. Wird durch die Auslenkung des Hebels 13 die Größe eines vorbestimmten, mechanisch-elastischen Widerstandes am Betätigungsglied 17 überwunden, so wird die Schalteinrichtung 21 umgeschaltet, d.h., daß das die Schalteinrichtung 21 darstellende Ventil über die Steuerleitung 25 die Überwacheinrichtung 23 mit Hilfssteuerdruck beaufschlagt, woraufhin letztere den Leitungsabschnitt 7 verschließt und den Leitungsabschnitt 7' und damit den Betriebsbremszylinder entlüftet.

Die Kraft, die am Betätigungsglied 17 der Schalteinrichtung 21 zum Zeitpunkt deren Umschaltung herrscht, entspricht einer ganz bestimmten Zuspannkraft des Hebels 13 der Feststellbremse, deren unvermeidliche Addition zu einer bestehenden Betriebsbremskraft noch keine zu Zerstörungen oder Verklemmungen der Bremsgestänge führende Größe erreicht und die andererseits während der zum Zeitpunkt der Umschaltung eintretenden Verlagerung der Zuspannkraft von der Betriebsbremse auf die Feststellbremse eine ausreichende, ein Fortrollen des Fahrzeuges verhindernde Feststellbremskraft hervorruft.

Dadurch, daß das Betätigungsglied 17 der Schalteinrichtung 21 nur bei Überwindung seiner vorbestimmten mechanisch-elastischen Kraft durch die Auslenkung der Lagerstelle 19 des Hebels 13 die Schalteinrichtung 21 und damit das darin enthaltene Ventil zum Umschalten bringt, ist sichergestellt, daß die Betriebsbremse zu einem Zeitpunkt gelöst wird, bei welchem einerseits die Feststellbremse bereits eine bestimmte Bremskraft aufweist und andererseits die zwangsweise kurzzeitige Summierung der Festellbremskraft zur Betriebsbremskraft unterhalb einer zu Schäden führenden Belastung bleibt.

Für die Schalteinrichtung 21 können Ausführungen mit unterschiedlicher Konstruktion benutzt werden. Beispielweise kann das Betätigungsglied 17 etwa parallel zu der von der Feststellbremse in der an der Betätigungseinrichtung 15 angegebenen Pfeilrichtung ausgeübten Zuspannkraft gegen eine vorgespannte Feder verschieblich im Gehäuse der Schalteinrichtung 21 gelagert sein. Beim Verschieben kann das Betätigungsglied 17 ein Wechselventil schalten, welches hierbei die Leitung 25 von der Atmosphäre abtrennt und mit der Leitung 23 verbindet.

Zum zweiten Ausführungsbeispiel der erfindungsgemäßen Bremseinrichtung nach Fig. 2 ist zu bemerken, daß zu dem Zeitpunkt, bei dem die Schalteinrichtung 21 in Folge eines eingeleiteten Feststellbremsvorganges bei bestehender Betriebsbremsung schaltet, die Leitungsverbindung 23' stets einen Bremsdruck führt, welcher der Schalteinrichtung 21 als über die Steuerverbindung 25 der Überwacheinrichtung 23 zuzuleitender Hilfssteuerdruck zur Verfügung steht.

Sowohl die Schalteinrichtung 21 als auch die Überwacheinrichtung 23 brauchen nicht druckmittelbetätigbare Einrichtungen zu sein, sondern können ein elektrischer Schalter und ein Magnetventil sein, die über eine elektrisch leitende Steuerverbindung 25 miteinander verbunden sind.

Es ist ferner auch möglich, die Überwacheinrichtung 23 in Ruhestellung unter Hilfssteuerdruck zu setzen, der bei Umschalten der Schalteinrichtung 21 unterbrochen wird.

Schließlich kann der Hebel 13 auch derart mit dem Betätigungsglied 11 und der Betätigungseinrichtung 15 der Feststellbremse gekoppelt sein, daß er sich bei Betätigung der Betriebsbremse, d.h. des Bremszylinders 9 um die Lagerstelle 19 dreht, ohne selbst irgendwelche Kräfte zu übertragen. Die Schalteinrichtung 21 bleibt dabei unbetätigt. Auch bei dieser Ausbildung erfolgt ein Umschalten der Schalteinrichtung 21 nur, wenn bei Betätigung der Feststellbremse der Hebel 13 ausreichend belastet wird.

**Patentansprüche**

1. Bremseinrichtung für Fahrzeuge mit einem über Steuerventileinrichtungen (1) druckmittelbeaufschlagbaren Bremszylinder (9) einer Betriebsbremse, mit einer willkürlich betätigbaren, auf das Bremsglied (Brems-Klotz oder -Backe) der Betriebsbremse über einen Hebel (13) wirdenden Feststellbremse und mit einer mit dem Hebel (13) der Feststellbremse gekoppelten Schalteinrichtung zur Überwachung der Druckmittelbeaufschlagung der Betriebsbremse, dadurch gekennzeichnet, daß die Schalteinrichtung von der Reaktionskraft in einer Lagerstelle (19) des Hebels (13) nur bei Überschreiten einer bestimmten Größe der Reaktionskraft und damit einer bestimmten, von den Zuspanngliedern der Feststellbremse hervorgerufenen Bremskraft betätigbar ist.

2. Bremseinrichtung nach Anspruch 1, dadurch gekennzeichnet, daß bei Überschreiten der bestimmten Größe der Reaktionskraft, die Lagerstelle (19) des Hebels (13) eine die Schalteinrichtung betätigende Auslenkung erfährt.

3. Bremseinrichtung nach Anspruch 1, dadurch gekennzeichnet, daß die Lagerstelle (19) an einem Betätigungsglied (17) der Schalteinrichtung (21) ausgebildet ist, daß bei Überwindung einer vorbestimmten mechanisch/elastischen Kraft in der Lagerstelle (19) durch die Zuspannkraft des angekoppelten Hebels (13) der Feststellbremse die Schalteinrichtung (21) anspricht und daß letztere über eine gesonderte Steuerverbindung (25) mit einer Überwacheinrichtung (23) für die Druckmittelbeaufschlagung der Betriebsbremse verbunden ist.

4. Bremseinrichtung nach den Ansprüchen 1 und 3, dadurch gekennzeichnet, daß die Schalteinrichtung (21) ein Ventil ist, welches über eine Leitung (22) mit einem Luftvorratsbehälter (5) und über eine einen Hilfssteuerdruck führende Steuerverbindung (25) mit der Überwacheinrichtung (23) verbunden ist, und daß die Überwacheinrichtung (23) ein vom Hilfssteuerdruck in der Steuerverbindung (25) pneumatisch steuerbares Umschaltventil ist.

5. Bremseinrichtung nach den Ansprüchen 1 und 4, dadurch gekennzeichnet, daß der Luftvorratsbehälter (5) der Vorratsluftbehälter der Bremseinrichtung ist.

6. Bremseinrichtung nach den Ansprüchen 1 und 3, dadurch gekennzeichnet, daß mittels der als Ventil ausgebildeten Schalteinrichtung (21) in die Steuerverbindung (25) als die Überwacheinrichtung (23) steuernder Hilfssteuerdruck der über eine Verbindungsleitung (23') von der Steuerventileinrichtung (1) zur Schalteinrichtung (21) geführte Bremsdruck einsteuerbar ist.

7. Bremseinrichtung nach den Ansprüchen 1 und 2, dadurch gekennzeichnet, daß die Schalteinrichtung (21) eine elektrische Kontakteinrichtung ist, die Steuerverbindung (25) zur Übertragung eines elektrischen Steuerstromes dient und die Überwacheinrichtung (23) ein Magnetventil ist.

**Revendications**

1. Installation de freinage pour véhicules, comportant un cylindre de frein (9), pouvant être chargé par un milieu sous pression par l'intermédiaire de dispositifs à valve de commande (1), d'un frein de service, un frein de stationnement pouvant être actionné à volonté et agissant par l'intermédiaire d'un levier (13) sur l'élément de frein (sabot ou mâchoire de frein) du frein de service, et un dispositif de commutation accouplé au levier (13) du frein de stationnement et permettant de contrôler l'application du milieu sous pression au frein de service, caractérisée par le fait que le dispositif de commutation ne peut être actionné par la force de réaction au niveau d'un point d'appui (19) du levier (13), que lors du dépassement d'une valeur déterminée de la force de réaction et donc d'un effort de freinage déterminée provoqué par les organes de serrage du frein de stationnement.

2. Installation de freinage selon la revendication 1, caractérisée par le fait que lors du dépassement de la valeur déterminée de la force de réaction, le point d'appui (19) du levier (13) subit une déviation actionnant le dispositif de commutation.

3. Installation de freinage selon la revendication 1, caractérisée par le fait que le point d'appui (19) est situé sur un organe d'actionnement (17) du dispositif de commutation (21), que le dispositif (21) de commutation répond lorsqu'une force mécanique/élastique prédéterminée est vaincue au niveau du point d'appui (19) par la force de serrage du levier (13) accouplé du frein de stationnement, et que le dispositif de commutation (21) est relié par l'intermédiaire d'une liaison particulière de commande (25) à un dispositif de contrôle (23) pour l'application du milieu sous pression au frein de service.

4. Installation de freinage selon les revendications 1 et 3, caractérisée par le fait que le dispositif de commutation (21) est une valve qui est reliée par l'intermediaire d'une conduite (22) à un réservoir d'air de réserve (5) et par l'intermédiaire d'une liaison de commande (25) dans laquelle règne une pression de commande auxiliaire, au dispositif de contrôle (23), et que ce dernier est une valve de commutation pouvant être commandée pneumatiquement par la pression de commande auxiliaire qui règne dans la liaison de commande (25).

5. Installation de freinage selon les revendications 1 et 4, caractérisée par le fait que le réservoir d'air de réserve (5) est le réservoir d'air de réserve du dispositif de freinage.

6. Installation de freinage selon les revendications 1 et 3, caractérisée par le fait que la pression de freinage envoyée du dispositif à valve de commande (1) au dispositif de commutation (21), par l'intermédiaire d'une conduite de liaison (23'), peut être réglée au moyen du dispositif de commutation (21) réalisé sous la forme d'une valve, dans la liaison de commande (25) en tant que pression de commande auxiliaire commandant le dispositif de contrôle (23).

7. Installation de freinage selon les revendications 1 et 2, caractérisée par le fait que le dispositif de commutation (21) est un dispositif électrique à contacts, que la liaison de commande (25) sert à la transmission d'un courant électrique de commande et que le dispositif de contrôle (23) est une électro-valve.

**Claims**

1. A braking device for vehicles with a service brake cylinder (9) to which a medium underpressure can be applied by way of control valve devices (1), with a parking brake which can be operated at will and which acts on the braking element (brake block or shoe) of the service brake by way of a lever (13), and with a switching device coupled with the lever (13) of the parking brake for the supervision of the application of a medium underpressure on the service brake, possessing the characteristic feature that the switching device can only be actuated by the reaction force at a bearing point (19) of the lever (13) if the reaction force exceeds a certain magnitude and thereby a certain brake force caused by the actuating elements of the parking brake is exceeded.

2. A braking device as claimed in Claim 1, possessing the characteristic feature that when the reaction force exceeds a certain magnitude, the bearing point (19) of the lever (13) undergoes a movement which results in actuation of the switching device.

3. A braking device as claimed in Claim 1, possessing the characteristic feature that the bearing point (19) is formed on an operating mechanism (17) of the switching device (21), that the switching device operates when a set mechanical/elastic force in the bearing point (19) is exceeded by the application force of the coupled lever (13) of the parking brake, and that the said switching device is connected, by way of a separate control connection (25), to a supervisory device (23) for the application of a medium underpressure to the service brake.

4. A braking device as claimed in Claims 1 and 3, possessing the characteristic feature that the switching device (21) is a valve which is connected to an air supply reservoir (5) via a pipe (22) on the one hand and connected to the supervisory device (23) via a control connection (25) carrying an auxiliary control pressure on the other, and that the supervisory device (23) is a change-over valve controlled pneumatically by the auxiliary control pressure in the control connection (25).

5. A braking device as claimed in Claims 1 and 4, possessing the characteristic feature that the air supply reservoir (5) is the air reservoir of the braking device.

6. A braking device as claimed in Claims 1 and 3, possessing the characteristic feature that the brake force passed from the control valve device (1) to the switching device (21) by way of an air supply pipe (32') can be applied, by means of the switching device in the form of a valve, to the control connection (25) as the auxiliary control pressure controlling the supervisory device (23).

7. A braking device as claimed in Claims 1 and 2, possessing the characteristic feature that the switching device (21) is an electrical contact device, the control connection (25) serves to transmit an electrical control current and the supervisory device (23) is a solenoid valve.

Fig. 1

Fig. 2